# EUROPEAN PATENT SPECIFICATION

(11) **EP 2 374 654 B1**
(45) Date of publication and mention of the grant of the patent: **15.10.2014**
(21) Application number: 11161569.6
(22) Date of filing: 07.04.2011
(51) Int. Cl.: B60N 2/14, B60N 2/24, B60N 2/38

(54) **Vehicle provided with a seat console movable inside a driver's cab**
Fahrzeug mit einer im Führerhaus beweglichen Sitzkonsole
Véhicule fourni avec une console de siège mobile dans la cabine du conducteur

(30) Priority: 07.04.2010 NL 1037865; 17.05.2010 NL 2004730
(43) Date of publication of application: 12.10.2011
(73) Proprietor: Terberg Benschop B.V., 3405 XK Benschop (NL)
(72) Inventor: Van Zoelen, Ronald Cornelis Johannes, 3437 JN, Nieuwegein (NL)
(74) Representative: Haan, Raimond

(56) References cited:
- FR-A1- 2 531 116
- GB-A- 1 420 373
- US-A- 3 964 713

## Description

The present invention relates to a vehicle provided with a seat console movable inside a driver's cab.

Seat consoles for vehicles driven regularly for long periods in forward drive as well as in reverse drive are known which are movable inside the driver's cab between a first substantially forward directed position and a second substantially rearward directed position. Depending on the travel direction, the driver can move the seat console between these two positions and so drive - in both forward and reverse drive - with his seat in the travel direction.

It is usual for some vehicles, such as bulldozers, to place the movable seat console in the middle of the driver's cab.

For other vehicles, such as terminal tractors, placing of the seat console in the middle of the driver's cab is undesirable since generally, in the narrow ship's holds in which they work, drivers of terminal tractors frequently lean out of the side windows of the driver's cab of their vehicle in order to obtain a better view of the situation during manoeuvring of their terminal tractor. It is therefore desirable in such terminal tractors to place the seat console as close as possible to a side wall of the driver's cab.

In addition, a compact driver's cab is essential, particularly in terminal tractors, in order to obtain the manoeuvrability required in a ship's hold and to limit the overall vehicle height as far as possible in order to enable travel below low ship decks.

The combination with a desired ergonomic workspace for the driver preferably requires the lowest possible step-in height of the driver's cab, and a sitting position complying with current ISO standards. This sitting position requires a determined length between seat and other operating elements such as the pedals, the steering wheel and diverse controls. Owing to this minimum length the movement of the seat console between two directions of travel requires a significant space for movement within the driver's cab, this being made particularly difficult when - as is the case with terminal tractors - it is desirable to preferably position the seat as closely as possible along a side wall of the driver's cab.

Known from FR 2 531 116 is a rolling machine wherein the orientation of the driver relative to the direction of travel can be reversed. It is also possible to move the driver's seat from the middle of the driver's cab to a position close to a side wall thereof, in order to enable the driver to lean out of the side window in order to observe the surrounding area on that side of his vehicle. Since the steering wheel is not situated in front of the driver's seat when the driver's seat is positioned close to the wall, this sitting position is not ergonomic and suitable only for brief use when view to the side is temporarily preferred.

GB 1 420 373 discloses a vehicle having the features of the preamble of claim 1 wherein the orientation of the driver relative to the direction of travel is reversible. The construction comprises two rotation bearings between which is situated an arm.

It is the object of the present invention to provide a vehicle wherein the above stated drawbacks are at least partially obviated.

The above stated object is achieved with the vehicle according to the invention, comprising:
- a driver's cab with a cab floor; and
- a seat console which is arranged movably relative to the cab floor and with which a driver's seat arranged thereon is movable between a first position directed substantially in forward travel direction of the vehicle, and a second position directed substantially in reverse travel direction of the vehicle;
- wherein the seat console comprises an upper plate arranged rotatably using a main bearing relative to the cab floor;
- wherein using a seat console bearing the driver's seat is arranged eccentrically relative to the rotation axis of the upper plate and rotatably relative to the upper plate;
- wherein the main bearing is arranged eccentrically and close to one side wall of the driver's cab; and
- wherein the steering wheel is arranged on the seat console at a fixed position relative to the driver's seat so that steering wheel and driver's seat are together rotatable about the rotation axis of the seat console bearing, and their relative orientation is maintained here while the seat console bearing is rotatable about the rotation axis of the main bearing relative to the cab floor.

Because the seat console bearing is arranged eccentrically relative to the rotation axis of the upper plate, and both the upper plate and the seat console bearing are rotatable, it is possible in the vehicle according to the invention to provide a driver's seat reversible in travel direction which on the one hand complies with all desired ergonomic standards and which on the other can nevertheless be positioned closely along a wall of the driver's cab. The desired ergonomic sitting position requires a determined length between seat and other operating elements, and thereby defines a minimum length of the seat console. The seat console bearing can be moved away from the side wall of the driver's cab by rotating the upper plate, after which the seat console then has sufficient space from the side wall that it can be reversed in travel direction.

According to a preferred embodiment, the steering wheel is arranged on the seat console at a fixed position relative to the driver's seat so that steering wheel and driver's seat are movable together with the seat console relative to the cab floor, and their relative rotation is here maintained. Because the steering wheel retains a fixed position relative to the driver's seat, the sitting position of the driver remains unchanged at all times, even when reversing the direction of the seat console inside the driver's cab. The ergonomic seating conditions are hereby guaranteed at all times. It is noted that an unchangeable relative rotation between seat console and steering wheel during the rotation movement provides the option of the steering wheel functioning as manual control unit during movement of the seat console relative to the cab floor. Because the driver controls the movement of the seat console relative to the cab floor by turning his driving wheel, a proportional controllability of the rotation movement is created which is related to the rotation speed of the steering wheel. In accordance with his requirement and comfort, the driver can hereby influence the speed progression of the rotation movement that reverses the seat console.

Because the seat console bearing is arranged in the upper plate connected to the main bearing, the seat console bearing is located within the theoretical cylindrical plane defined by the main bearing. The main bearing, which is a slewing bearing, hereby has a relatively large diameter which enables bearing-mounting of the seat console while retaining structural stiffness. In the case of work vehicles such as terminal tractors, which frequently drive over ramps when driving in and out of a ship's hold, this stiffness is desirable to enable absorption of shock loads.

A further advantage of the slewing bearing applied for the main bearing - in particular because the hollow seat console bearing is situated inside the main bearing - is the possible throughfeed of assorted conduits, such as hydraulic, pneumatic and/or electrical conduits.

Through the use of a slewing bearing the driver's cab can also be insulated against sound penetrating from, among other parts, the motor compartment, for instance by seals in the form of sealing lips, but also if desired by filling the hollow throughfeed space in the slewing bearings with sound-insulating material.

The cab floor preferably consists of different levels in order to make the whole seat console placeable as low as possible relative to the road surface.

According to a preferred embodiment, the vehicle further comprises transmission means for thereby converting a rotation of the upper plate to a rotation of the seat console, so that the movements between upper plate and seat console are linked such that the progression of the movement of the driver's seat mounted on the seat console is thereby determined. The desired path of the seat console is in this way predetermined, and also prevents the possibility of the seat console being moved by mistake against the side wall by the driver during its movement progression.

According to a further preferred embodiment, the main bearing comprises a first ring mounted on the upper plate and a second ring mounted on the cab floor, and the first ring mounted on the upper plate can be connected drivably to a drive motor so that the upper plate is rotatably drivable therewith relative to the cab floor.

According to yet another preferred embodiment, the first ring is connected to a gear rim on which a drive pinion driven by the drive motor can engage.

According to yet another preferred embodiment, the seat console bearing comprises a first ring mounted on the seat console and a second ring mounted on the upper plate, and the first ring of the seat console bearing is drivable so that the seat console with driver's seat is rotatably drivable therewith relative to the upper plate.

According to yet another preferred embodiment, the first ring of the seat console bearing is drivable with a further drive motor, wherein the drive motors for driving the seat console bearing and the upper plate are, if desired, synchronously drivable. Depending on the embodiment, the drive motor can drive the first ring directly or indirectly via a gear pinion.

According to yet another preferred embodiment, the first ring of the seat console bearing is connected on its side remote from the upper plate to a toothed wheel which engages with its teeth on a gear rim mounted on the cab floor so that, during a rotational movement of the upper plate via a displacement of the seat console bearing, an engaging contact between toothed wheel and gear rim brings about a desired relative rotation between first and second ring of the seat console bearing.

The second ring of the seat console bearing is mounted on the upper plate, whereby during a rotation of the upper plate relative to the cab floor the seat console bearing moves through part of a circular path. This circular path corresponds to the curvature of the gear rim mounted on the cab floor. The toothed wheel arranged on the side of the first ring remote from the upper plate makes engaging contact with the gear rim during the movement through the part of the circular path, whereby the movement through the circular path is converted to a relative rotation between first and second rings of the seat console bearing.

According to yet another preferred embodiment, first connection points are arranged on the cab floor, and second connection points are connected to the first ring of the seat console bearing, wherein one or more connecting conduits are arranged between the first and second connection points. The connecting conduits can consist of hydraulic hoses and/or electricity cables and/or pneumatic conduits.

According to yet another preferred embodiment, the one or more connecting conduits roll up and unroll as the driver's seat runs through a movement progression between the first position directed substantially in forward travel direction of the vehicle and the second position directed substantially in reverse travel direction of the vehicle.

According to yet another preferred embodiment, locking means are provided for thereby locking the driver's seat relative to the driver's cab in the first position of the driver's seat directed substantially in forward travel direction of the vehicle and the second position of the driver's seat directed substantially in reverse travel direction of the vehicle.

According to yet another preferred embodiment, the locking means engage on the seat console so that via the seat console the driver's seat arranged thereon is lockable relative to the driver's cab.

According to yet another preferred embodiment, the locking means comprise:
- an arm rotatable about a rotation point and provided with a locking pin;
- at least one recess arranged in the outer periphery of the rotatable part;
- wherein a first imaginary line runs through the centres of the rotation point and the locking pin;
- wherein a second imaginary line runs through the centre of the locking pin and the rotation centre of the rotatable part;
- wherein the locking means are movable between an unlocked and a locked position; and
- wherein in the locked position the locking pin drops into the recess such that the first and second imaginary lines are positioned at least substantially perpendicularly relative to each other, so that when a moment of force is exerted on the rotatable part of the seat console this does not generate a rotational torque on the rotating locking. This prevents the locking pin being pressed outward out of the recess when a moment of force is exerted on the rotatable part.

The present invention will be further elucidated in the following description with reference to the drawing, in which:
Figure 1 is a perspective view of a terminal tractor with a roller trailer coupled thereto;
Figure 2 is a perspective view of the driver's cab of the terminal tractor shown in figure 1;
Figure 3 is a top view of a first situation, wherein the seat console is in the forward directed position shown in figure 2;
Figure 4 is a top view of a second situation, wherein the seat console is in an intermediate position which makes getting in and out easier for the driver;
Figure 5 is a top view of a third situation, wherein the seat console is rotated about 180° relative to figure 3 and now faces to the rear;
Figure 6 is an exploded perspective view of the device according to the present invention;
Figure 7 is an exploded perspective representation of the device shown in figure 6, as seen in another view;
Figure 8 is a perspective bottom view of the device according to the present invention;
Figure 9 is a perspective top view of the device shown in figure 8;
Figure 10 is a perspective bottom view in cross-section of the device shown in figures 6-9 as seen from the underside of the driver's cab;
Figure 11 is a cross-sectional side view of the device shown in figure 10;
Figure 12 is an enlarged cross-sectional view of the device shown in figure 11;
Figure 13 is a bottom view of the situation shown in figure 3, wherein the connecting conduits are substantially rolled-up;
Figure 14 is a bottom view of the situation shown in figure 5, wherein the connecting conduits are substantially unrolled;
Figure 15 shows a view of the locking means in an unlocked situation; and
Figure 16 is a view of the locking means shown in figure 15 in a locked situation.

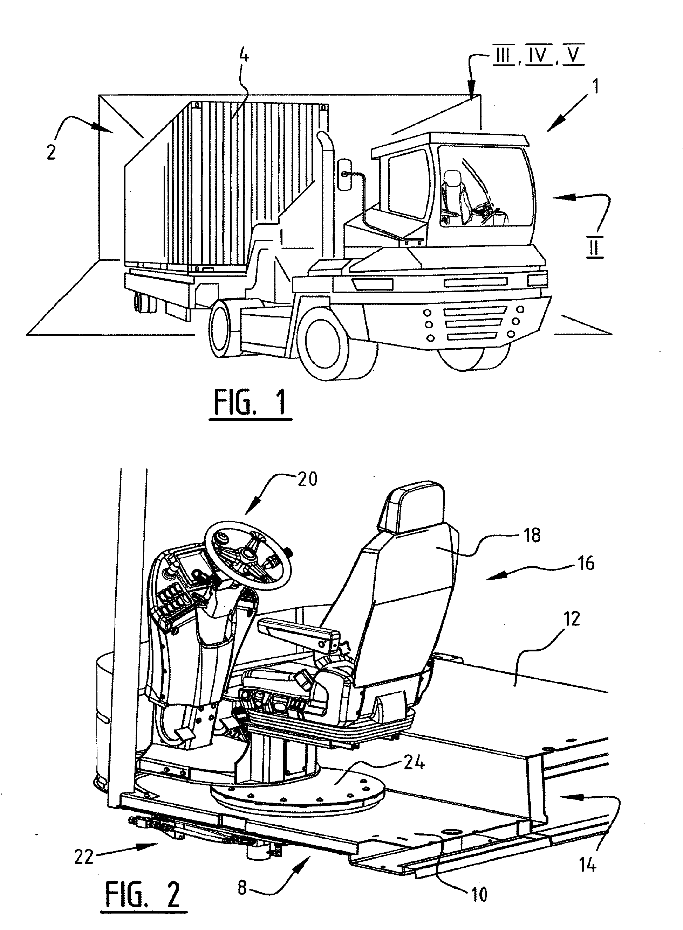

Figure 1 shows a terminal tractor 1 pulling a container 4 out of a ship's hold 2. Situated in the driver's cab (cab 6) of terminal tractor 1 is a cab floor 8 which in the embodiment shown in figure 2 comprises a low part 10 and an elevated part 12. The motor compartment 14 is located under the elevated part 12 of cab floor 8. Seat console 16 is preferably situated on the low part 10 of cab floor 8 so that the overall height of terminal tractor 1 is limited as far as possible. A limited height of terminal tractor 1 is advantageous since it enables terminal tractor 1 to drive through a ship's hold below low ship decks.

In addition, a positioning of seat console 16 on the lower part 10 has the further advantage that the driver of terminal tractor 1 has the lowest possible step-in height.

The rotatable seat console 16 is mounted rotatably on an upper plate 24 and this upper plate 24 is itself in turn mounted rotatably relative to cab floor 8 by means of rotation bearing 26.

Seat console 16 consists of a seat 18 and operating elements 20 such as petals, a steering wheel and a plurality of controls. The desired ergonomic sitting position requires a determined length between seat 18 and the other operating elements 20, and thereby defines a minimum length of seat console 16. The seat console bearing 50 can be moved away from side wall 5 of driver's cab 6 by means of rotating upper plate 24, after which seat console 16 then has sufficient space from side wall 5 that it can be reversed in travel direction.

It is noted that the circle C describes the path required if only upper plate 24 could rotate. This circular path C would then extend outside the contours of driver's cab 6, which means that it would not be possible to reverse the travel direction of seat console 16 if it were situated so close to side wall 5 of driver's cab 6. Side wall 5 cuts off the theoretical circular path C, whereby the available space S within which the seat console 16 has to be reversible is limited considerably.

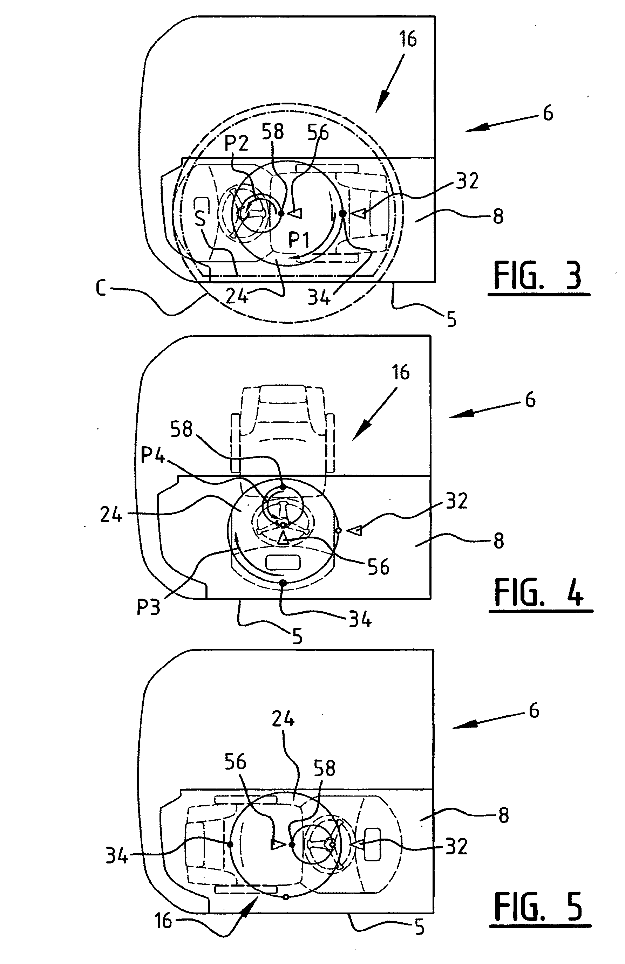

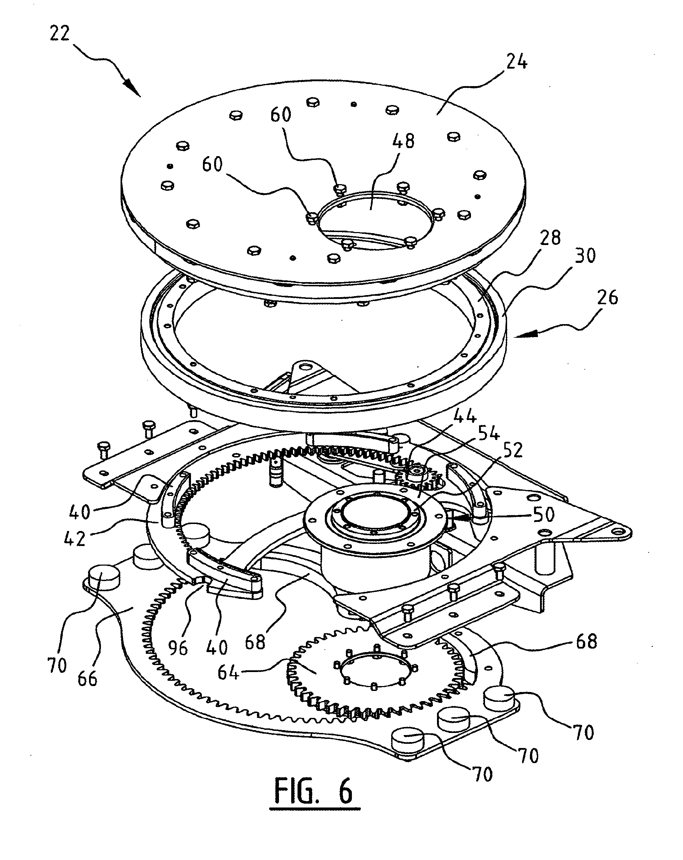

Elucidated with reference to figures 3 to 5 is how seat console 16 is movable between the forward directed position shown in figures 2 and 3 and the position directed to the rear shown in figure 5. Reference is made for this purpose to two bearings, i.e. main bearing 26 and the seat console bearing 50, both of which will be elucidated in more detail with reference to figure 6 and further.

Main bearing 26 has an inner ring 28 and an outer ring 30. Inner ring 28 is connected to upper plate 24, while outer ring 30 is connected to cab floor 8. The seat console bearing 50 comprises an inner ring 52 mounted on seat console 16 and an outer ring 54 mounted on upper plate 24.

Use is made in figures 3-5 of a number of reference points, i.e. a fixed reference point 32 situated on outer ring 30 of main bearing 26 (shown as a triangle) and a movable reference point 34 situated on inner ring 28 of main bearing 26 (and shown as a dot). In addition, there is a fixed reference point 56 situated on outer ring 54 of the seat console bearing 50 (shown as a triangle) and a movable reference point situated on inner ring 52 of the seat console bearing 50 (and shown as a dot).

In the situation shown in figure 3, which corresponds to the orientation of seat console 16 as shown in figure 2, the respective reference marks 32, 34 and 56, 58 lie close to each other. In the view of figure 3 these are the 'three o'clock' positions.

From the situation shown in figure 3 to the situation shown in figure 4 the upper plate 24 moves through a quarter-turn in the direction of movement indicated by arrow P1. Seat console 16 simultaneously moves through a half-turn in the direction of movement indicated by arrow P2. Seat console 16 moves as according to arrow P2 in a direction opposite to the direction of movement P1 of upper plate 24.

It is noted that the intermediate position shown in figure 4 also simplifies stepping in and out of the driver's cab for the driver.

At the transition from the situation shown in figure 4 to the situation shown in figure 5 the upper plate 24 once again moves through a quarter-turn, this being indicated by arrow P3 in figure 4. The seat console once again moves simultaneously through a half-turn in the opposite direction of movement, this being indicated by arrow P4. Seat console 16 hereby finally arrives in the situation shown in figure 5, and ends rotated through about 180° relative to the starting position shown in figure 3.

It is noted, perhaps unnecessarily, that by moving through the above stated steps in reverse direction the seat console 16 can be moved back from the position shown in figure 5 to the position shown in figure 3.

It is noted that both in the situation shown in figure 3 and in the situation shown in figure 5 the seat console 16 is situated close to side wall 5 of driver's cab 6. By applying two parts rotating in opposite direction, respectively upper plate 24 and seat console 16, this placing close to side wall 5 of cab 6 can take place while the seat console also has a length sufficient to comply with currently applicable ISO standards relating to driver ergonomics.

Because the steering wheel retains a fixed position relative to the driver's seat (figure 4), the ergonomic sitting position of the driver remains ensured even during reversal of seat console 16. In the course of a working day a driver will make such reversing movements many tens of times with his seat console 16. In the case of for instance terminal tractors loading or unloading a ship's hold the direction of travel will be changed each time a container is coupled and uncoupled. Two reversing movements will therefore take place during each loading cycle.

It is noted that the approximately 180° through which upper plate 24 rotates is in practice preferably slightly less than 180°, since the centre of plate 24 thereby comes to lie slightly outside the central axis of seat console 16, and so can be placed closer to side wall 5 of driver's cab 6. This creates more space for motor compartment 14.

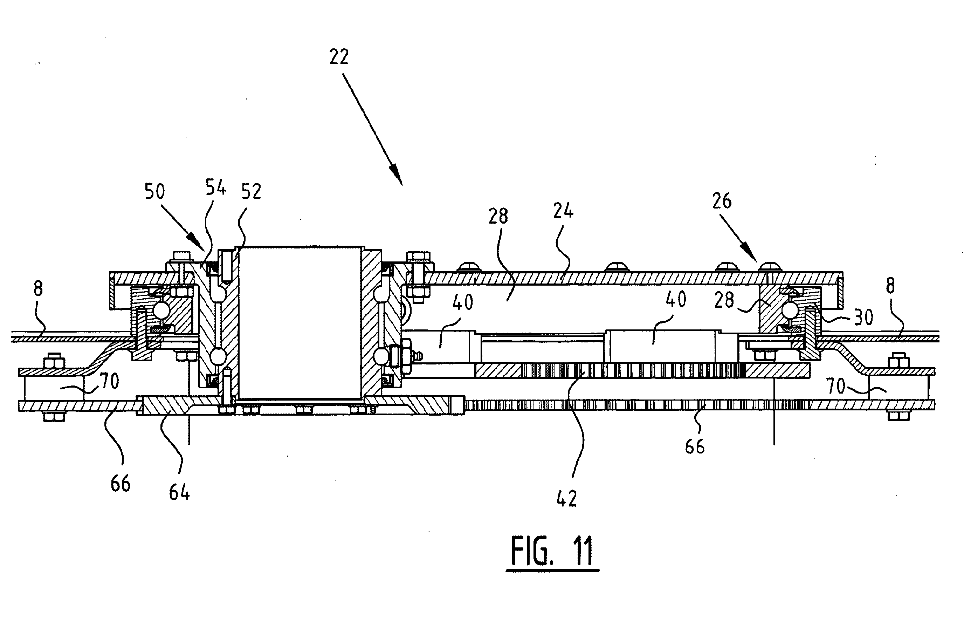

The construction of device 22 for reversing seat console 16 will be elucidated in more detail with reference to figures 6-12. More particularly elucidated is how the interaction between the directions of movement indicated by respective arrows P1, P2 and P3, P4 takes place.

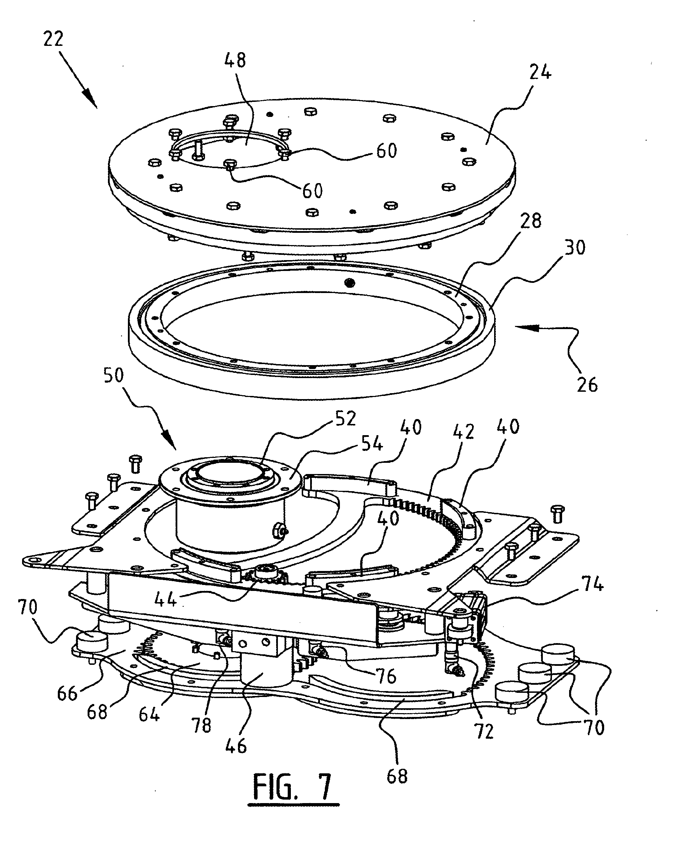

Figures 6 and 7 show an exploded perspective view of device 22 for reversing seat console 16. Device 22 comprises a drive motor 46 with which a drive pinion 44 can be driven. This drive pinion 44 engages on the gear rim of a rotatable part 42 which is connected using spacer blocks 40 to inner ring 28 of main bearing 26. Upper plate 24 is likewise connected to inner ring 28 of main bearing 26. Upper plate 24 is therefore rotatable by means of drive motor 46 via drive pinion 44 and the gear rim of rotatable part 42. Outer ring 30 of main bearing 26 is connected to cab floor 8.

Present in upper plate 24 is an opening 48 through which the seat console 16 (not shown) can be mounted on an inner ring 52 of the seat console bearing 50.

Upper plate 24 is connected to outer ring 54 of the seat console bearing 50, while inner ring 52 of the seat console bearing 50 is connected on the side remote from upper plate 24 to a toothed wheel 64 which engages with its teeth on a gear rim of a fixed part 66 secured to cab floor 8.

When drive pinion 44 rotates upper plate 24 via the rotatable part 42, toothed wheel 64 runs over the gear rim of fixed part 66, whereby inner ring 52 of the seat console bearing 50 rotates relative to outer ring 54 of the seat console bearing 50. Seat console 16, which is mounted on inner ring 52 of the seat console bearing 50, hereby moves in a rotation direction opposite to the rotation direction in which upper plate 24 moves. Thus realized with the correct choice of gear ratios is that, as upper plate 24 moves through a quarter-turn, the seat console 16 moves through a half-turn relative to this upper plate 24.

Figure 7 also shows three sensors 72, 76, 78, such as rotation sensors 76 and 78 which serve to detect the rotation direction of the components of device 22, approach sensor 72 for detecting the locking which can take place by means of pneumatic cylinder 74. Using sensors 76 and 78 it is also possible to determine in which quadrant of the movement progression the device 22 is situated and whether device 22 is situated in one of the extreme positions.

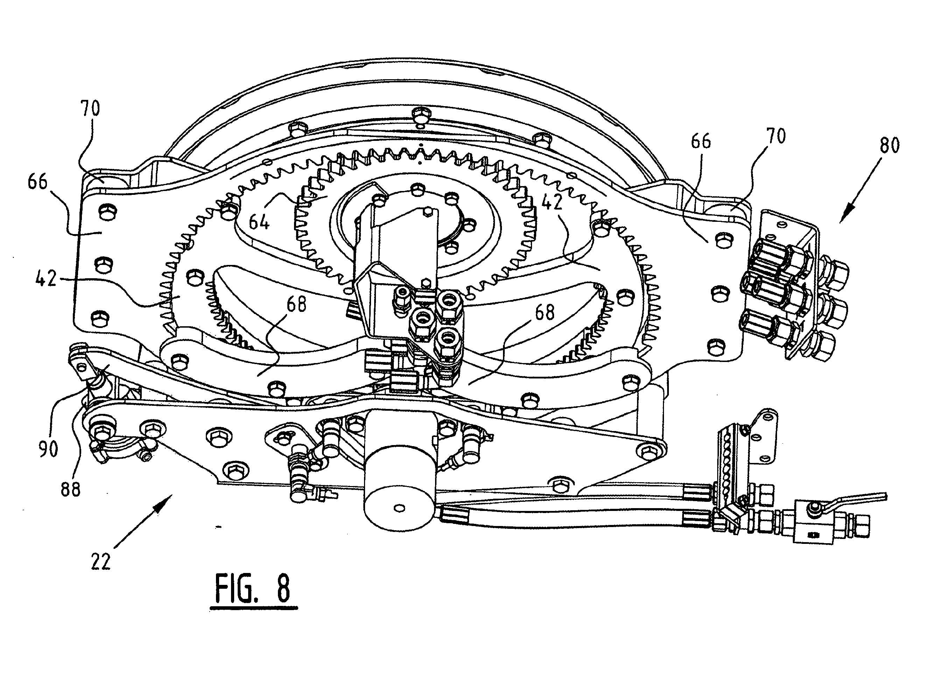

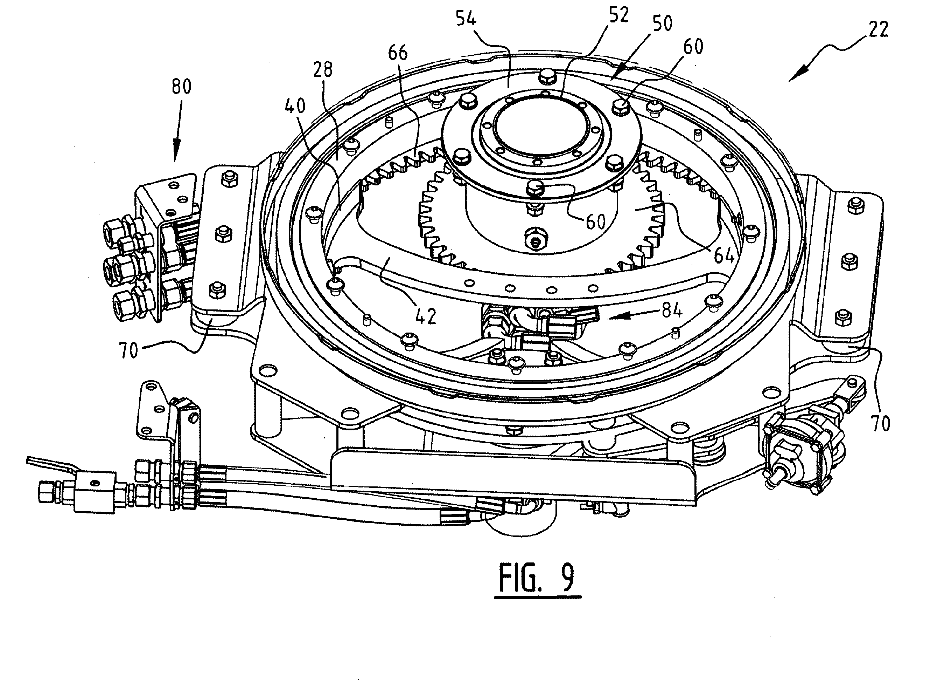

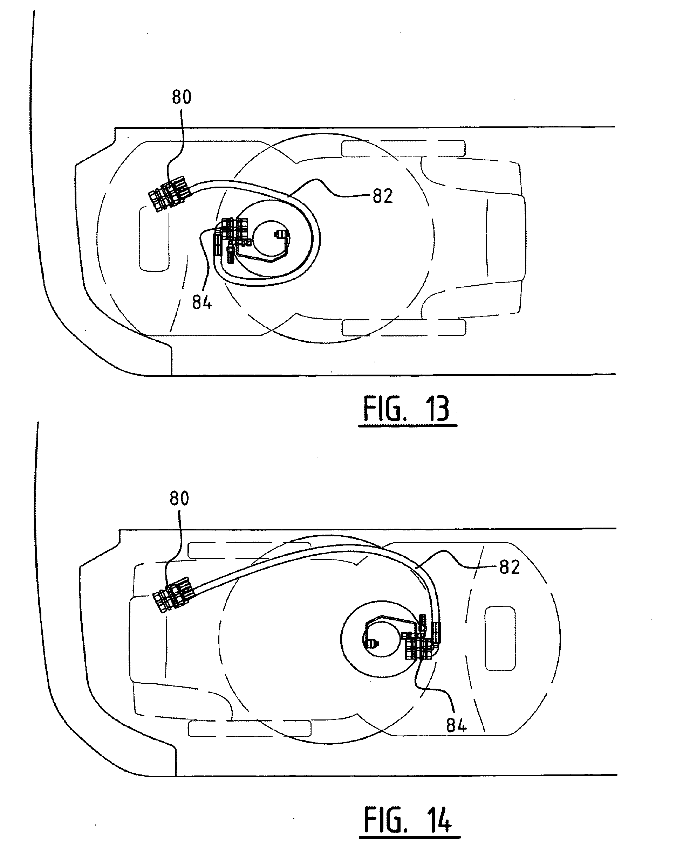

Figures 8 and 9 show device 22 in assembled state, wherein the view of figure 8 clearly shows the connection points 80 which are fixed to the underside of cab floor 8. Situated between these connection points 80 and the connection points 84 are conduits 82 which have the function of hydraulic hoses, pneumatic conduits and/or electrical conduits. As shown in figures 13 and 14, conduits 82 are rolled up and unrolled each time seat console 16 runs through the movement progression elucidated with reference to figures 3-5. Figure 13 shows the same situation as figure 3, and figure 14 shows the situation as in figure 5. Because conduits 82 mutually connect the connection points 80 and 84 by means of being rolled up and unrolled, a highly reliable and wear-resistant connection is provided which has been found in tests to be suitable to withstand more than 100,000 rotation movements.

It is noted that the connecting conduits 82 are rolled up and unrolled when driver's seat 18 runs through a movement progression between the first position directed substantially in forward travel direction of the vehicle (figure 3) and the second position directed substantially in reverse travel direction of the vehicle (figure 5). In which position conduits 82 are rolled up or unrolled depends wholly on the location of connection points 80, 84 and is not limited to the shown preferred embodiment.

From connection points 84 the conduits 82, which consist of hydraulic conduits and/or pneumatic conduits and/or electrical connections, run further through the hollow space inside inner ring 52 which, if desired, can be filled with a sound insulating material.

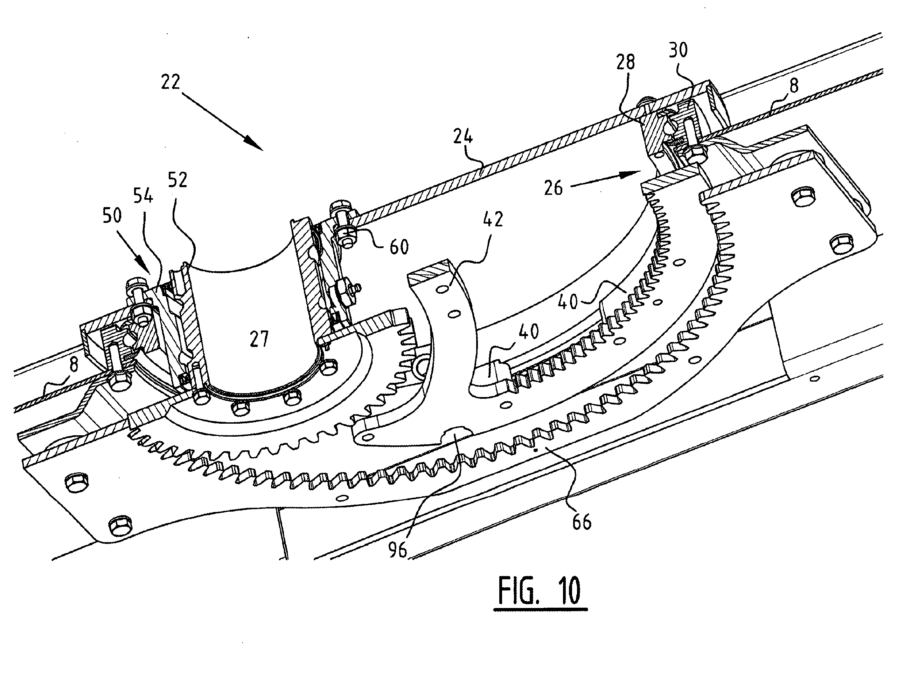

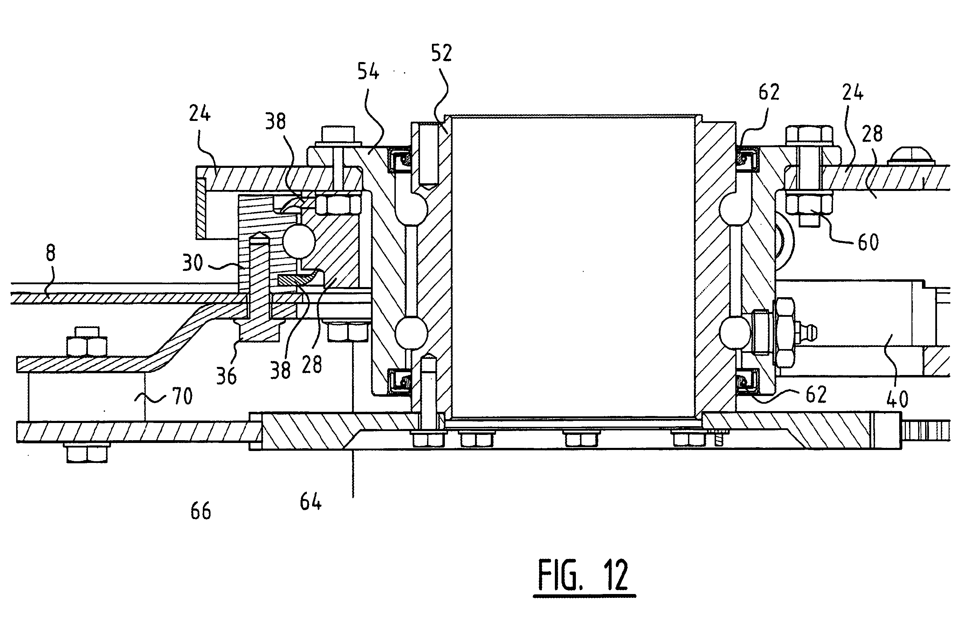

Figures 10-12 show cross-sectional views of device 22, wherein the detail view of figure 12 shows that upper plate 24 is connected by means of a bolt connection 60 to outer ring 54 of the seat console bearing 50. Sealing rings 62 are also provided between outer ring 54 and inner ring 52 of the seat console bearing 50. Sealing lips 38 are arranged in main bearing 26 between inner ring 28 and outer ring 30.

The fixed part 66 provided with the gear rim on which toothed wheel 64 engages is fixed to cab floor 8 using somewhat elastic rubber blocks 70. Rubber blocks 70 prevent production and assembly tolerances possibly resulting in toothed wheel 64 jamming on gear rim 66.

It is noted that the rubber sealing lips 38 ensure that a closed circuit is created from cab floor 8 to driver's cab 6, this providing the vehicle with a sound insulation which excludes from driver's cab 16 the greater part of sounds coming from motor compartment 14.

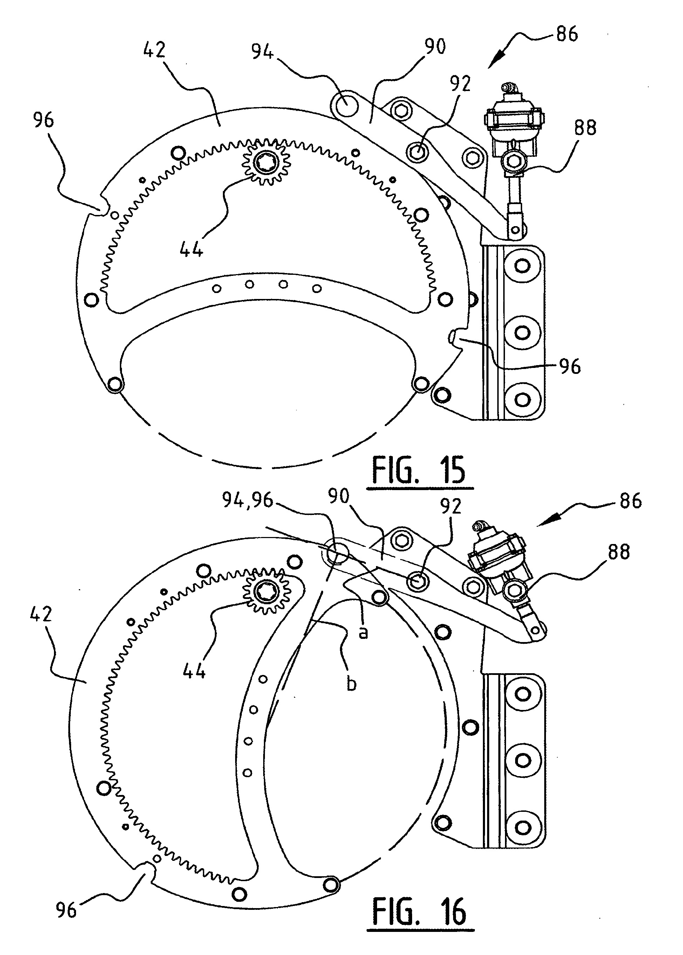

Figures 15 and 16 show the operation of locking means 86. Figure 15 shows an unlocked situation, wherein the rod of air cylinder 88 of locking means 86 is in an extended position and thereby rotates the arm 90 round rotation point 92 such that locking pin 94 is situated outside the outer periphery of rotatable part 42.

Present in the outer periphery of rotatable part 42 are two recesses 96 with which the extreme positions shown respectively in figures 3 and 5 and in 13 and 14 can be secured.

In the locked situation of figure 16 the locking pin 94 is situated in a recess 96 in rotatable part 42 and in this way locks the seat console 16, and thereby driver's seat 18, via rotatable part 42.

The broken line a shown in figure 16 runs through the centres of rotation point 92 and locking pin 94, while the broken line b connects the centre of locking pin 94 and the rotation centre of rotatable part 42.

It is noted that in the locked situation the locking pin 94 drops into a recess 96 such that the broken lines a and b are at least substantially perpendicular so that, when a moment of force is exerted on rotatable part 42, no rotation torque can be generated on locking arm 90 because the direction of the force coincides with line segment a. This prevents the locking pin 94 being pressed out of recess 96 in the case a moment of force is exerted on rotatable part 42. In order to secure the locked position at all times, pneumatic cylinder 86 is equipped with a spring which will always move pin 88 toward the cylinder.

Although they show preferred embodiment of the invention, the above described embodiments are intended solely for the purpose of illustrating the present invention and not to limit the scope of the invention in any way. It is particularly noted that the skilled person can combine technical measures of the different embodiments. The scope of the invention is therefore defined solely by the following claims.

## Claims

1. Vehicle, comprising:
- a driver's cab (6) with a cab floor (8);
- a seat console (16) which is arranged movably relative to the cab floor (8) and with which a driver's seat (18) arranged thereon is movable between a first position directed substantially in forward travel direction of the vehicle, and a second position directed substantially in reverse travel direction of the vehicle;
- wherein the seat console (16) comprises an upper plate (24) arranged rotatably using a main bearing (26) relative to the cab floor (18);
- wherein using a seat console bearing (50) the driver's seat (18) is arranged eccentrically relative to the rotation axis of the upper plate (24) and rotatably relative to the upper plate (24);
**characterized in that**
- the main bearing (26) is arranged eccentrically and close to one side wall (5) of the driver's cab (6); and
- the steering wheel is arranged on the seat console (16) at a fixed position relative to the driver's seat (18) so that steering wheel and driver's seat are together rotatable about the rotation axis of the seat console bearing (50), and their relative orientation is maintained here while the seat console bearing (50) is rotatable about the rotation axis of the main bearing (26) relative to the cab floor (18).

2. Vehicle as claimed in claim 1, further comprising:
- transmission means (50, 64, 66) for thereby converting a rotation of the upper plate (24) to a rotation of the seat console (16), so that the movements between upper plate (24) and seat console (16) are linked such that the progression of the movement of the driver's seat (18) mounted on the seat console (18) is thereby determined.

3. Vehicle as claimed in claim 1 or 2, wherein:
- the main bearing (26) comprises a first ring (28) mounted on the upper plate (24) and a second ring (30) mounted on the cab floor (8); and
- wherein the first ring (28) mounted on the upper plate (24) is connected drivably to a drive motor (46) so that the upper plate (24) is rotatably drivable therewith relative to the cab floor (18).

4. Vehicle as claimed in claim 3, wherein the first ring (28) is connected to a gear rim on which a drive pinion (44) driven by the drive motor (46) can engage.

5. Vehicle as claimed in any of the foregoing claims, wherein:
- the seat console bearing (50) comprises a first ring (52) mounted on the seat console (16) and a second ring (54) mounted on the upper plate (24); and
- wherein the first ring (52) of the seat console bearing (50) is drivable so that the seat console (16) with driver's seat (18) is rotatably drivable therewith relative to the upper plate (24).

6. Vehicle as claimed in claim 5, wherein:
- the first ring (52) of the seat console bearing (50) is connected on its side remote from the upper plate (24) to a toothed wheel (64) which engages with its teeth on a gear rim mounted on the cab floor (8) so that, during a rotational movement of the upper plate (24) via a displacement of the seat console bearing (50), an engaging contact between toothed wheel (64) and the gear rim brings about a desired relative rotation between first and second rings of the seat console bearing.

7. Vehicle as claimed in any of the foregoing claims, wherein:
- first connection points (80) are arranged on the cab floor (8);
- second connection points (84) are connected to the first ring (52) of the seat console bearing (50);
- wherein one or more connecting conduits (82) are arranged between the first and second connection points (80, 84) for guiding therethrough hydraulic conduits and/or pneumatic conduits and/or electrical connections.

8. Vehicle as claimed in claim 7, wherein the one or more connecting conduits roll up and unroll as the driver's seat (18) runs through a movement progression between the first position directed substantially in forward travel direction of the vehicle and the second position directed substantially in reverse travel direction of the vehicle.

9. Vehicle as claimed in any of the foregoing claims, wherein locking means (86) are provided for thereby locking the driver's seat (18) relative to the driver's cab (6) in the first position of the driver's seat (18) directed substantially in forward travel direction of the vehicle and the second position of the driver's seat (18) directed substantially in reverse travel direction of the vehicle.

10. Vehicle as claimed in claim 9, wherein the locking means (86) engage on the seat console (16) so that via the seat console (16) the driver's seat (18) arranged thereon is lockable relative to the driver's cab (6).

11. Vehicle as claimed in claim 10, wherein the locking means (86) comprise:
- an arm (90) rotatable about a rotation point (92) and provided with a locking pin (94);
- at least one recess (96) arranged in the outer periphery of the rotatable part (42);
- wherein a first imaginary line (a) runs through the centres of the rotation point (92) and the locking pin (94);
- wherein a second imaginary line (b) runs through the centre of the locking pin (94) and the rotation centre of the rotatable part (42);
- wherein the locking means (86) are movable between an unlocked and a locked position; and
- wherein in the locked position the locking pin (94) drops into the recess (96) such that the first and second imaginary lines (a, b) are positioned at least substantially perpendicularly relative to each other.

## Patentansprüche

1. Fahrzeug, umfassend:
- eine Fahrerkabine (6) mit einem Kabinenboden (8),
- eine Sitzkonsole (16), die in Bezug auf den Kabinenboden (8) bewegbar angeordnet ist und auf der ein Fahrersitz (18) angeordnet ist, der bewegbar ist zwischen einer ersten Position, die im Wesentlichen in Vorwärtsfahrtrichtung des Fahrzeugs ausgerichtet ist, und einer zweiten Position, die im Wesentlichen in Rückwärtsfahrtrichtung des Fahrzeugs ausgerichtet ist,
- wobei die Sitzkonsole (16) eine obere Platte (24) umfasst, die mit Hilfe eines Hauptlagers (26) in Bezug auf den Kabinenboden (8) drehbar angeordnet ist,
- wobei der Fahrersitz (18) mit Hilfe eines Sitzkonsolenlagers (50) exzentrisch in Bezug auf die Drehachse der oberen Platte (24) und drehbar in Bezug auf die obere Platte (24) angeordnet ist,
**dadurch gekennzeichnet, dass**
- das Hauptlager (26) exzentrisch und nahe einer Seitenwand (5) der Fahrerkabine (6) angeordnet ist, und
- das Lenkrad an der Sitzkonsole (16) an einer festen Position in Bezug auf den Fahrersitz (18) angeordnet ist, so dass das Lenkrad und der Fahrersitz gemeinsam um die Drehachse des Sitzkonsolenlagers (50) drehbar sind und hierbei deren Ausrichtung zueinander beibehalten bleibt, während gleichzeitig das Sitzkonsolenlager (50) in Bezug auf den Kabinenboden (18) um die Drehachse des Hauptlagers (26) drehbar ist.

2. Fahrzeug nach Anspruch 1, ferner umfassend:
- Übertragungsmittel (50, 64, 66) zum Umwandeln einer Drehung der oberen Platte (24) in eine Drehung der Sitzkonsole (16), so dass die Bewegungen zwischen der oberen Platte (24) und der Sitzkonsole (16) derart verbunden sind, dass dadurch der Bewegungsablauf des auf der Sitzkonsole (18) montierten Fahrersitzes (18) bestimmt wird.

3. Fahrzeug nach Anspruch 1 oder 2, wobei:
- das Hauptlager (26) einen ersten Ring (28) umfasst, der an der oberen Platte (24) montiert ist, sowie einen zweiten Ring (30), der an dem Kabinenboden (8) montiert ist, und
- wobei der an der oberen Platte (24) montierte erste Ring (28) antreibbar mit einem Antriebsmotor (46) verbunden ist, so dass die obere Platte (24) dadurch in Bezug auf den Kabinenboden (18) drehbar antreibbar ist.

4. Fahrzeug nach Anspruch 3, wobei der erste Ring (28) mit einem Zahnkranz verbunden ist, in den ein von dem Antriebsmotor (46) angetriebenes Antriebsritzel (44) eingreifen kann.

5. Fahrzeug nach einem der vorhergehenden Ansprüche, wobei:
- das Sitzkonsolenlager (50) einen ersten Ring (52) umfasst, der an der Sitzkonsole (16) montiert ist, sowie einen zweiten Ring (54), der an der oberen Platte (24) montiert ist, und
- wobei der erste Ring (52) des Sitzkonsolenlagers (50) derart antreibbar ist, dass die Sitzkonsole (16) mit dem Fahrersitz (18) dadurch in Bezug auf die obere Platte (24) drehbar antreibbar ist.

6. Fahrzeug nach Anspruch 5, wobei:
- der erste Ring (52) des Sitzkonsolenlagers (50) auf seiner von der oberen Platte (24) entfernten Seite mit einem Zahnrad (64) verbunden ist, dessen Zähne in einen an dem Kabinenboden (8) montierten Zahnkranz eingreifen, so dass bei einer Drehbewegung der oberen Platte (24) durch eine Verschiebung des Sitzkonsolenlagers (50) durch einen Eingriffskontakt zwischen dem Zahnrad (64) und dem Zahnkranz eine gewünschte relative Drehung zwischen dem ersten und dem zweiten Ring des Sitzkonsolenlagers bewirkt wird.

7. Fahrzeug nach einem der vorhergehenden Ansprüche, wobei:
- erste Anschlusspunkte (80) an dem Kabinenboden (8) angeordnet sind,
- zweite Anschlusspunkte (84) mit dem ersten Ring (52) des Sitzkonsolenlagers (50) verbunden sind,
- wobei zwischen den ersten und den zweiten Anschlusspunkten (80, 84) eine oder mehrere Anschlussleitungen (82) angeordnet sind, zum Durchführen von Hydraulikleitungen und/oder pneumatischen Leitungen und/oder elektrischen Verbindungen.

8. Fahrzeug nach Anspruch 7, wobei sich die eine oder die mehreren Anschlussleitungen während eines Bewegungsablaufs des Fahrersitzes (18) zwischen der im Wesentlichen in Vorwärtsfahrtrichtung des Fahrzeugs ausgerichteten ersten Position und der im Wesentlichen in Rückwärtsfahrtrichtung des Fahrzeugs ausgerichteten zweiten Position aufrollen und abrollen.

9. Fahrzeug nach einem der vorhergehenden Ansprüche, wobei Verriegelungsmittel (86) vorgesehen sind, womit sich der Fahrersitz (18) in Bezug auf die Fahrerkabine (6) in der im Wesentlichen in Vorwärtsfahrtrichtung des Fahrzeugs ausgerichteten ersten Position des Fahrersitzes (18) und in der im Wesentlichen in Rückwärtsfahrtrichtung des Fahrzeugs ausgerichteten zweiten Position des Fahrersitzes (18) verriegeln lässt.

10. Fahrzeug nach Anspruch 9, wobei die Verriegelungsmittel (86) an der Sitzkonsole (16) eingreifen, so dass über die Sitzkonsole (16) der darauf angeordnete Fahrersitz (18) in Bezug auf die Fahrerkabine (6) verriegelbar ist.

11. Fahrzeug nach Anspruch 10, wobei die Verriegelungsmittel (86) umfassen:
- einen Arm (90), der um einen Drehpunkt (92) drehbar ist und mit einem Verriegelungsstift (94) ausgestattet ist,
- mindestens eine Aussparung (96), die am Außenrand des drehbaren Teils (42) angeordnet ist,
- wobei eine erste imaginäre Linie (a) durch die Mittelpunkte des Drehpunktes (92) und des Verriegelungsstiftes (94) verläuft,
- wobei eine zweite imaginäre Linie (b) durch den Mittelpunkt des Verriegelungsstiftes (94) und das Drehzentrum des drehbaren Teils (42) verläuft,
- wobei die Verriegelungsmittel zwischen einer entriegelten und einer verriegelten Stellung bewegbar sind und
- wobei in der verriegelten Stellung der Verriegelungsstift (94) in die Ausnehmung (96) fällt, so dass die erste und die zweite imaginäre Linie (a, b) zumindest im Wesentlichen senkrecht zueinander angeordnet sind.

## Revendications

1. Véhicule comprenant :
une cabine (6) de conducteur avec un plancher de cabine (8) ;
une console de siège (16), qui est agencée de manière mobile par rapport au plancher de cabine (8), et avec laquelle un siège (18) de conducteur, agencé sur cette dernière, est mobile entre une première position dirigée sensiblement dans la direction de déplacement vers l'avant du véhicule et une seconde position dirigée sensiblement dans la direction de déplacement vers l'arrière du véhicule ;
dans lequel la console de siège (16) comprend une plaque supérieure (24) agencée en rotation en utilisant un palier principal (26) par rapport au plancher de cabine (8) ;
dans lequel, en utilisant un palier (50) de console de siège, le siège (18) de conducteur est agencé de manière excentrique par rapport à l'axe de rotation de la plaque supérieure (24) et de manière rotative par rapport à la plaque supérieure (24) ;
**caractérisé en ce que** :
le palier principal (26) est agencé de manière excentrique et à proximité d'une paroi latérale (5) de la cabine (6) du conducteur ; et
le volant est agencé sur la console de siège (16) dans une position fixe par rapport au siège (18) du conducteur de sorte que le volant et le siège du conducteur peuvent tourner ensemble autour de l'axe de rotation du palier de console de siège (50) et leur orientation relative est maintenue là alors que le palier de console de siège (50) peut tourner autour de l'axe de rotation du palier principal (26) par rapport au plancher de cabine (18).

2. Véhicule selon la revendication 1, comprenant en outre :
des moyens de transmission (50, 64, 66) pour convertir ainsi une rotation de la plaque supérieure (24) en une rotation de la console de siège (16), de sorte que les mouvements entre la plaque supérieure (24) et la console de siège (16) sont liés de sorte que la progression du mouvement du siège de conducteur (18) monté sur la console de siège (18) est ainsi déterminée.

3. Véhicule selon la revendication 1 ou 2, dans lequel :
le palier principal (26) comprend une première bague (28) montée sur la plaque supérieure (24) et une seconde bague (30) montée sur le plancher de cabine (8) ; et
dans lequel la première bague (28) montée sur la plaque supérieure (24) est raccordée par entraînement à un moteur d'entraînement (46) de sorte que la plaque supérieure (24) peut être entraînée en rotation avec ce dernier par rapport au plancher de cabine (18).

4. Véhicule selon la revendication 3, dans lequel la première bague (28) est raccordée à un bord d'engrenage sur lequel un pignon d'entraînement (44) entraîné par le moteur d'entraînement (46) peut se mettre en prise.

5. Véhicule selon l'une quelconque des revendications précédentes, dans lequel :
le palier (50) de console de siège comprend une première bague (52) montée sur la console de siège (16) et une seconde bague (54) montée sur la plaque supérieure (24) ; et
dans lequel la première bague (52) du palier de console de siège (50) peut être entraînée de sorte que la console de siège (16) avec le siège de conducteur (18) peut être entraînée de manière rotative avec ce dernier par rapport à la plaque supérieure (24).

6. Véhicule selon la revendication 5, dans lequel :
la première bague (52) du palier (50) de console de siège est raccordée sur son côté à distance de la plaque supérieure (24), à une roue dentée (64) qui se met en prise avec ses dents sur un bord d'engrenage monté sur le plancher de cabine (8) de sorte que, pendant un mouvement de rotation de la plaque supérieure (24) via un déplacement du palier (50) de console de siège, un contact de mise en prise entre la roue dentée (64) et le bord d'engrenage provoque une rotation relative souhaitée entre les première et seconde bagues du palier de console de siège.

7. Véhicule selon l'une quelconque des revendications précédentes, dans lequel :
des premiers points de raccordement (80) sont agencés sur le plancher de cabine (8) ;
des seconds points de raccordement (84) sont raccordés à la première bague (52) du palier de console de siège (50) ;
dans lequel un ou plusieurs conduits de raccordement (82) sont agencés entre les premiers et seconds points de raccordement (80, 84) pour guider à travers ces derniers des conduits hydrauliques et/ou des conduits pneumatiques et/ou des raccordements électriques.

8. Véhicule selon la revendication 7, dans lequel les un ou plusieurs conduit(s) de raccordement s'enroulent et se déroulent lorsque le siège de conducteur (18) se déplace dans une progression de mouvement entre la première position dirigée sensiblement dans la direction de déplacement vers l'avant du véhicule, et la seconde position dirigée sensiblement dans la direction de déplacement vers l'arrière du véhicule.

9. Véhicule selon l'une quelconque des revendications précédentes, dans lequel des moyens de blocage (86) sont prévus pour bloquer ainsi le siège de conducteur (18) par rapport à la cabine de conducteur (6) dans la première position du siège de conducteur (18) dirigé sensiblement dans la direction de déplacement vers l'avant du véhicule, et la seconde position du siège de conducteur (18) dirigé sensiblement dans la direction de déplacement vers l'arrière du véhicule.

10. Véhicule selon la revendication 9, dans lequel les moyens de blocage (86) se mettent en prise sur la console de siège (16) de sorte que, via la console de siège (16), le siège de conducteur (18) agencé sur cette dernière, peut se bloquer par rapport à la cabine de conducteur (6).

11. Véhicule selon la revendication 10, dans lequel les moyens de blocage (86) comprennent :
un bras (90) pouvant tourner autour d'un point de rotation (92) et doté d'une broche de blocage (94) ;
au moins un évidement (96) agencé dans la périphérie externe de la partie rotative (42) ;
dans lequel une première ligne imaginaire (a) passe par les centres du point de rotation (92) et la broche de blocage (94) ;
dans lequel une seconde ligne imaginaire (b) passe par le centre de la broche de blocage (94) et le centre de rotation de la partie rotative (42) ;
dans lequel les moyens de blocage (86) sont mobiles entre une position débloquée et bloquée ; et
dans lequel, dans la position bloquée, la broche de blocage (94) tombe dans l'évidement (96) de sorte que les première et seconde lignes imaginaires (a, b) sont positionnées au moins de manière sensiblement perpendiculaire l'une par rapport à l'autre.
